# EUROPEAN PATENT SPECIFICATION

(11) **EP 1 690 622 B1**
(45) Date of publication and mention of the grant of the patent: **03.06.2015**
(21) Application number: 06250797.5
(22) Date of filing: 15.02.2006
(51) Int. Cl.: B23D 45/04, B23D 47/02

(54) **Powered saw apparatus**
Kraftgetriebene Sägevorrichtung
Appareil de sciage motorisée

(30) Priority: 15.02.2005 GB 0503102
(43) Date of publication of application: 16.08.2006
(73) Proprietor: Power Box AG, 6301 Zug (CH)
(72) Inventor: Firth, Robert, Pocklington, York YO42 2QN (GB)
(74) Representative: Wood, Graham

(56) References cited:
- EP-A- 0 310 508
- EP-A- 1 369 196
- EP-A- 1 415 745
- AU-B2- 633 571
- CA-A1- 2 372 484
- DE-U1-202004 004 929
- FR-A1- 2 745 737
- US-A- 1 867 275
- US-A- 3 923 086
- US-A- 4 249 443
- US-A- 4 576 076
- US-A- 5 524 516
- US-A1- 2004 022 595
- PATENT ABSTRACTS OF JAPAN vol. 008, no. 028 (M-274), 7 February 1984 (1984-02-07) -& JP 58 186519 A (MASAYUKI NISHI), 31 October 1983 (1983-10-31)

## Description

The invention relates to a cutting unit as per the preamble of claim 1. Such a cutting unit is known from EP 0310508.

EP0310508 discloses a mitre saw arrangement in which there is provided a cutting head supported on a single slide but the bearing arrangement used to ensure the support of the slide in an accurate position during sliding movement and use of the cutting head is not disclosed. JP58186519 discloses another single slide arrangement in which the bearing arrangement requires the slide to be substantially U shaped in cross section and for the bearings which allow the sliding movement between the slide and base to be achieved to be located so as to contact the internal faces of the slide and for further bearing surface components to be fixed in position on the slide to allow this to occur. US5524516 discloses a single slide saw in which grooves are provided on the outer surface of the slide to contact and retain ball bearings between the slide and surrounding sleeves.

The aim of the present invention is to provide a cutting unit of an improved form which allows performance of the cutting unit to be maintained while, at the same time, allowing a reduction in the materials used. A further aim is to provide a reduction in the packaging which is required for transport of the cutting unit.

These aims are achieved by a cutting unit comprising the combination of features of claim 1. Preferred embodiments of the invention are disclosed by the dependent claims.

Typically, the bearing assembly is of a length so as to provide the required degree of support so as to maintain the longitudinal axis of the slide in a substantially horizontal plane regardless of the particular position of the slide with the bearing assembly.

In one embodiment, the slide can be removed from the bearing assembly thus allowing the cutting unit, when provided as a retail package, to have the slide provided and packaged as a separate item thereby allowing the packaging of the cutting unit to have the slide positioned in the most practical position for packaging rather than having to be connected to the base to protrude beyond the base of the cutting unit as is conventionally the case.

In a further embodiment, the slide is detachable from the bearing assembly in use thereby allowing alternative slides to be selectively fitted and used for specific cutting functions as required by the user. Thus, the user may be provided with a cutting unit which receives a range of slides, possibly of different profile, but more typically of different lengths, thereby providing the user with the option of selecting the length of stroke of movement of the cutting head with respect to the base.

Specific embodiments of the invention are now described with reference to the accompanying drawings, wherein:-
Figures 1 and 2 illustrate perspective views of a cutting unit in accordance with the invention in one embodiment; and
Figures 3 to 7 illustrate detailed views of the arrangement between the slide and bearing assembly in accordance with one embodiment of the invention.

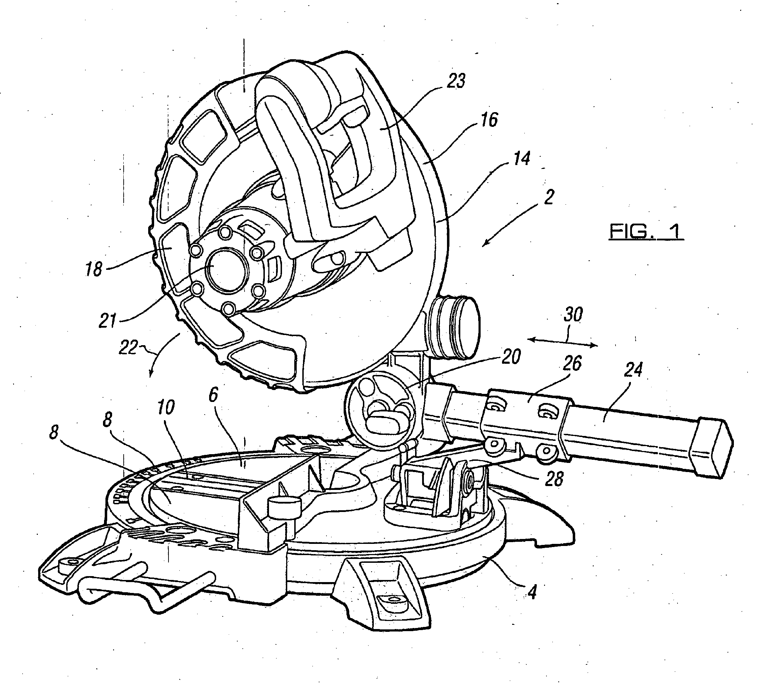

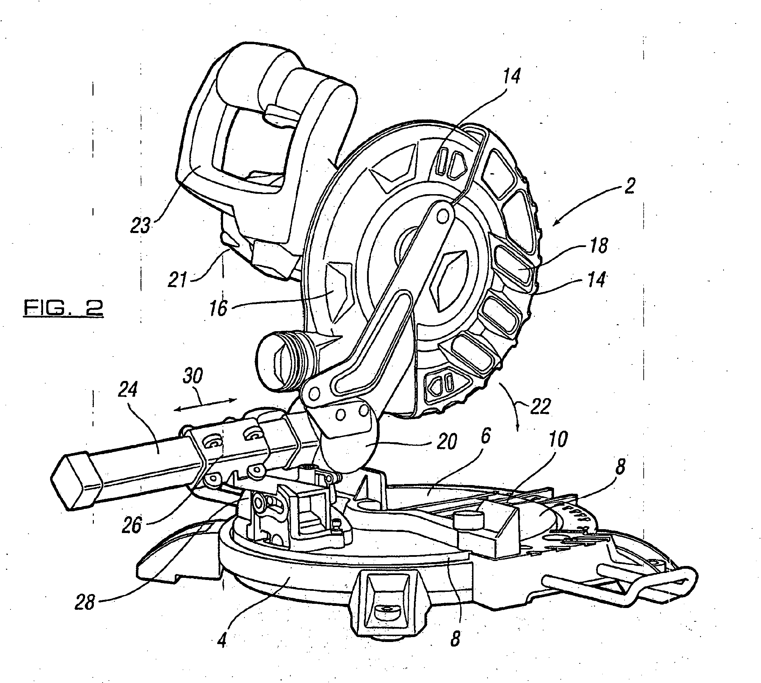

Referring firstly to Figures 1 and 2, there is illustrated a cutting unit 2. The cutting unit includes a base 4 with a turntable 6. The top faces of the turntable and base form a surface 8 for the reception of a workpiece, not shown, which is to be cut. The base includes a slot 10 for the reception therein of the circular blade (not shown) of a cutting head 14 when the cutting head is moved to the covered cutting position. The cutting head 14 is provided with a guard 16, with a movable portion 18 to expose the blade for cutting.

The cutting head is provided on a pivotal mount 20 so as to be movable between a raised position as shown and the lowered cutting position by movement in direction of arrow 22 at which the lower guard 18, which encloses part of the blade in the raised position, is moved so as to expose the blade and allow the blade to be passed into the workpiece, as the blade is rotated, to perform the cutting operation. The cutting unit can be provided with the provision of a mitre cut and/or a bevel arrangement to allow the same to be angled and/or bevelled and the operation of these will be as with conventional saws of this type.

The cutting head is also provided with a motor 21 for powered rotation of blade and a handle 23. The cutting head is mounted on a slide 24 and in turn, the slide in this embodiment is mounted in a bearing assembly 26 which, in turn, is located on a mounting 28 attached to the base 4. The provision of the slide and bearing assembly allows the cutting head and, in this case, the slide, to be moved as indicated by arrow 30, thereby providing a movement of the cutting head along a horizontal plane in parallel to the surface 8 and hence the workpiece, thereby allowing the blade to be passed along and through the workpiece as the cutting operation takes place. The reverse stroke allows the blade to be returned back to the cutting position.

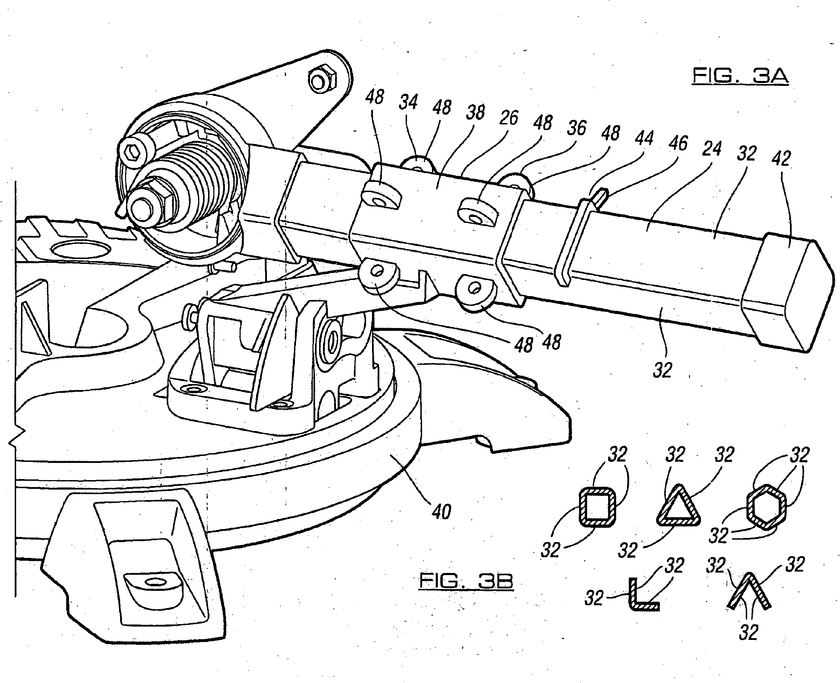

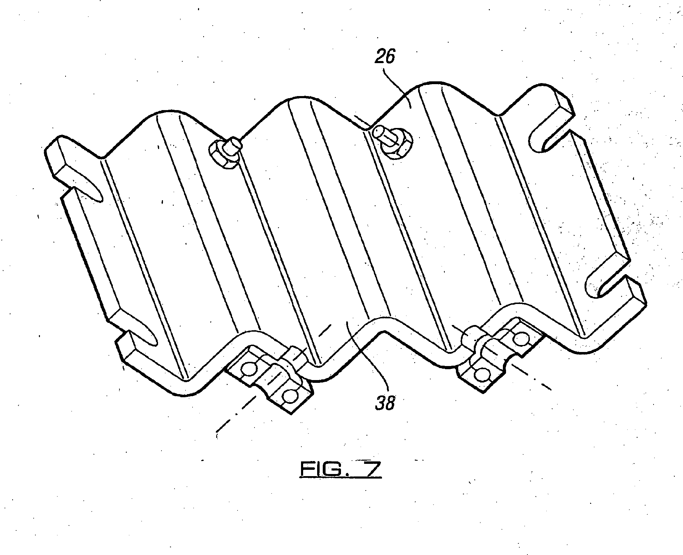

The slide and bearing assembly is described in more detail in Figures 3a to 7. According to the invention the slide 24 has a square cross section. Figure 3b illustrates a range of cross sections of various slides which, apart from the square cross section, are not according to the invention.

In one embodiment the bearing assembly can include at least two spaced sets of bearings 34, 36. The bearings in each set comprise a roller bearing 48 for each flat surface 32 provided on the slide. With the spacing and length of the bearing housing 38 in general, being selected so as to provide sufficient support for the slide 24 to ensure that the slide is maintained in a substantially horizontal plane regardless of the part of the slide which is located on the bearing assembly at any given time.

Preferably adjustment means are provided (not shown) which allow for the adjustment of the bearings and/or cutting head alignment to allow wear of the slide and/or cutting head to be taken into account.

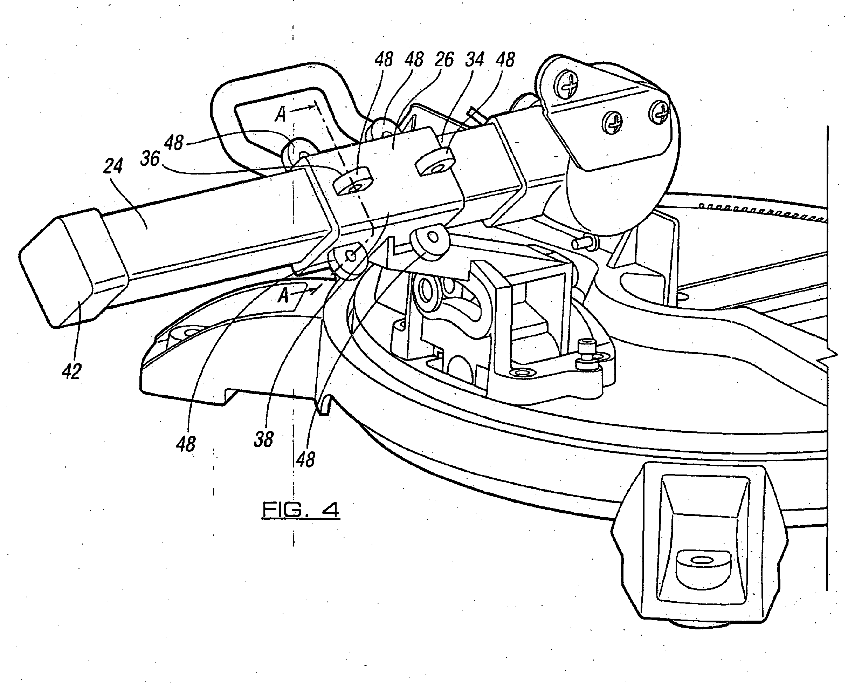

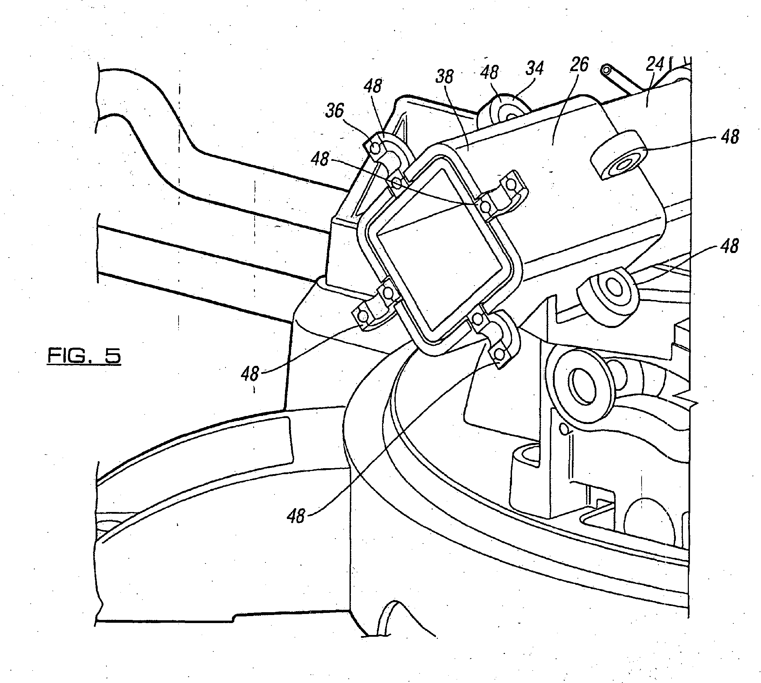

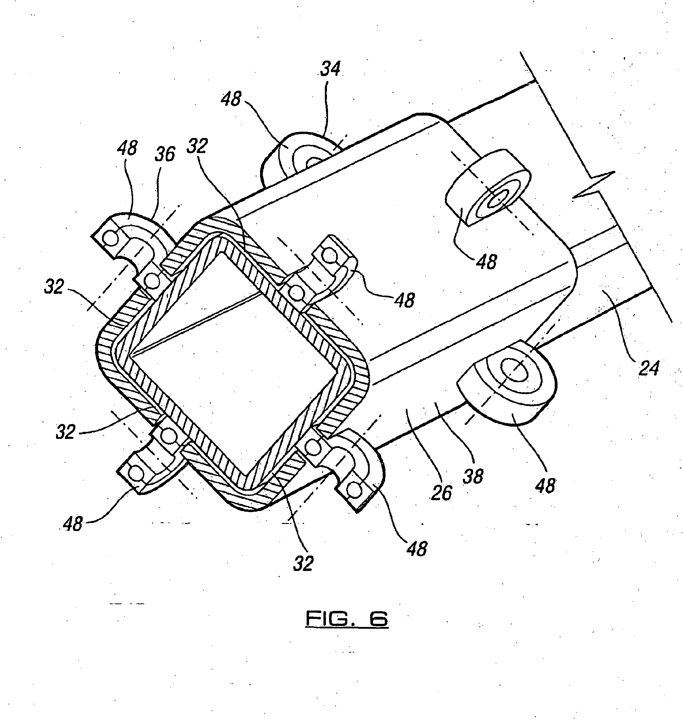

Figures 3a and 4 show the bearing assembly positioned intermediate the ends of the slide and Figures 5 and 6 illustrate a cross sectional view along line A-A shown in Figure 4.

It will be appreciated that the slide can be selectively removed from the bearing assembly by removing the end cap 42 either for storage purposes and/or packaging purposes. This also allows the substitution of the slide with an alternative slide which may be of a different profile but more typically will be of a different length thereby allowing the required length of stroke to be achieved for particular cutting purposes.

In a further feature, there may be provided at least one stop member 44 as illustrated in Figure 3a. The stop member can be selectively positionable along the slide 24 so as to limit the length of stroke of movement of the cutting head. The stop typically is set by the user via a clamp arrangement 46 such as a screw or over centre clamp at a particular location on the slide and retained thereon. This therefore allows a user to determine a particular length of stroke for a particular cutting operation and set the stop or stops so as to define the required length of stroke. Thus, if the cutting operation is to be repeated a number of times, the user can be certain that as long as they move the cutting head to contact the stop or stops, they will have moved the cutting head the required distance for each cut so that the cut will be consistent for each workpiece. If two stops are provided the distance between the same will define the length of movement of the cutting head on the slide.

The provision of the slide in accordance with the invention offers the advantage that this arrangement lends itself to the ability for the purchaser/user of the cutting unit to self assemble the unit once purchased and subsequently remove and replace the slide in the bearing assembly as required. This allows adaptation of the cutting unit and also more efficient packaging and storage of the slide and hence cutting unit generally.

## Claims

1. A cutting unit (2), said cutting unit (2) including a cutting head (14) having a circular blade provided for rotation, said cutting head (14) pivotally movable between a raised position and a lowered, cutting, position, said cutting head (14) located on a mounting (28) connected to a base (4) on which the work piece to be cut can be located, said cutting head (14) slidingly movable with respect to the base (4), via one slide (24) and a bearing assembly (26) provided for relative sliding movement, said slide (24) provided, in at least the portion along which sliding movement occurs, with an outer profile formed by four flat outer faces (32) **characterised in that** the external shape of the slide (24) in cross section is square, said bearing assembly (26) including a plurality of roller bearings (48) provided such that each of the said flat outer faces (32) of the slide (24) is contacted by at least one roller bearing (48) to allow the slide (24) to provide the required location of the cutting head (14) mounting in all axes apart from the longitudinal axis of the slide (24), and **in that** said cutting head (14) is provided on a pivotal mount (20) mounted at a first, front, end of the slide (24), such that cutting movement of the cutting head (14) about the pivotal mount (24) occurs at said first end of the slide (24) located above and over the base.

2. Apparatus according to claim 1 wherein the cutting head is pivotally movable about a pivotal axis parallel with the slide to provide bevel cutting.

3. Apparatus according to claim 1 wherein the slide can be detached from the remainder of the apparatus.

4. Apparatus according to claim 3 wherein any of a range of slides can be selectively fitted to the apparatus.

5. Apparatus according to claim 1 wherein at least one stop is provided on the slide to provide a limit to the extent of movement of the cutting head in at least one direction.

6. Apparatus according to claim 5 wherein the position of the stop on the slide is adjustable by a user of the apparatus.

7. Apparatus according to claim 5 wherein stops are provided, a first to limit movement of the cutting head along the slide in a first direction and the other to limit movement in a second opposing direction.

## Patentansprüche

1. Schneideinheit (2), wobei die genannte Schneideinheit (2) einen Schneidkopf (14) mit einem zur Drehung vorgesehenen kreisförmigen Blatt beinhaltet, wobei der genannte Schneidkopf (14) zwischen einer angehobenen Stellung und einer gesenkten Schneidstellung schwenkbar ist, wobei der genannte Schneidkopf (14) sich auf einer Halterung (28) befindet, die mit einer Basis (4) verbunden ist, auf der das zu schneidende Werkstück positioniert werden kann, wobei der genannte Schneidkopf (14) über einen Schieber (24) und eine Lageranordnung (26), die für eine relative Gleitbewegung bereitgestellt ist, mit Bezug auf die Basis (4) gleitend beweglich ist, wobei der genannte Schieber (24) in wenigstens dem Teil, an dem entlang die Gleitbewegung stattfindet, mit einem Außenprofil versehen ist, das von vier flachen Außenflächen (32) gebildet wird, **dadurch gekennzeichnet, dass** die äußere Form des Schiebers (24) im Querschnitt viereckig ist, die genannte Lageranordnung (26) mehrere Rollenlager (48) beinhaltet, die so vorgesehen sind, dass jede der genannten flachen Außenflächen (32) des Schiebers (24) mit einem Rollenlager (48) in Kontakt ist, damit der Schieber (24) die erforderliche Positionierung der Halterung des Schneidkopfs (14) in allen Achsen außer der Längsachse des Schiebers (24) bereitstellen kann, und dadurch, dass der genannte Schneidkopf (14) an einer drehgelenkigen Halterung (20) bereitgestellt ist, die an einem ersten, vorderen Ende des Schiebers (24) montiert ist, so dass die Schneidbewegung des Schneidkopfs (14) um die drehgelenkige Halterung (24) an dem genannten ersten Ende des Schiebers (24) stattfindet, das über und oberhalb der Basis liegt.

2. Vorrichtung nach Anspruch 1, wobei der Schneidkopf zum Gehrungsschneiden um eine Drehachse schwenkbar ist, die mit dem Schieber parallel ist.

3. Vorrichtung nach Anspruch 1, wobei der Schieber vom Rest der Vorrichtung abgenommen werden kann.

4. Vorrichtung nach Anspruch 3, wobei wahlweise ein beliebiger einer Reihe von Schiebern an der Vorrichtung angebracht werden kann.

5. Vorrichtung nach Anspruch 1, wobei an dem Schieber wenigstens ein Anschlag vorgesehen ist, um eine Begrenzung für das Ausmaß der Bewegung des Schneidkopfs in wenigstens einer Richtung bereitzustellen.

6. Vorrichtung nach Anspruch 5, wobei die Position des Anschlags an dem Schieber durch einen Benutzer der Vorrichtung verstellbar ist.

7. Vorrichtung nach Anspruch 5, wobei Anschläge vorgesehen sind, ein erster zum Begrenzen der Bewegung des Schneidkopfs an dem Schieber entlang in einer ersten Richtung und der andere zum Begrenzen der Bewegung in einer zweiten, entgegengesetzten Richtung.

## Revendications

1. Unité de coupe (2), ladite unité de coupe (2) incluant une tête de coupe (14) avec une lame circulaire laquelle est prévue pour une rotation, ladite tête de coupe (14) étant apte à être déplacée de façon pivotante entre une position relevée et une position abaissée, lors de la coupe, ladite tête de coupe (14) étant positionnée sur une monture (28) raccordée à un socle (4) sur lequel il est possible de positionner la pièce de travail destinée à être coupée, ladite tête de coupe (14) étant apte à être déplacée de façon coulissante par rapport au socle (4), par l'intermédiaire d'une coulisse (24) et d'un ensemble à roulements (26) prévus en vue d'un mouvement de coulissement relatif, ladite coulisse (24) étant munie, dans au moins la portion le long de laquelle se produit le mouvement de coulissement, d'un profil externe formé par quatre faces externes plates (32), **caractérisée en ce que** la forme extérieure de la coulisse (24) a une coupe transversale carrée, ledit ensemble à roulements (26) incluant une pluralité de roulements à rouleaux (48) lesquels sont prévus de sorte qu'au moins un roulement à rouleaux (48) se met au contact de chacune desdites faces externes plates (32) de la coulisse (24) pour permettre à la coulisse (24) d'assurer à la monture de la tête de coupe (14) le positionnement requis dans tous les axes, mis à part l'axe longitudinal de la coulisse (24), et **en ce que** ladite tête de coupe (14) est prévue sur une monture pivotante (20) montée au niveau d'une première extrémité, frontale, de la coulisse (24), de sorte que le mouvement de coupe de la tête de coupe (14) autour de la monture pivotante (24) se produit au niveau de ladite première extrémité de la coulisse (24) positionnée au-dessus du socle et par dessus ce dernier.

2. Appareil selon la revendication 1, la tête de coupe étant apte à être déplacée de façon pivotante autour d'un axe de pivotement qui est parallèle à la coulisse afin de procurer une coupe en biseau.

3. Appareil selon la revendication 1, la coulisse pouvant être détachée du reste de l'appareil.

4. Appareil selon la revendication 3, une coulisse quelconque, parmi une gamme de coulisses, pouvant être installée de façon sélective sur l'appareil.

5. Appareil selon la revendication 1, au moins une butée étant prévue sur la coulisse afin de constituer une limite à l'étendue du mouvement de la tête de coupe suivant au moins un sens.

6. Appareil selon la revendication 5, la position de la butée sur la coulisse étant réglable par un utilisateur de l'appareil.

7. Appareil selon la revendication 5, des butées étant prévues, une première destinée à limiter le mouvement de la tête de coupe le long de la coulisse suivant un premier sens, et l'autre destinée à limiter le mouvement dans un deuxième sens opposé.
